# EUROPEAN PATENT SPECIFICATION

(11) **EP 2 343 234 B1**
(45) Date of publication and mention of the grant of the patent: **29.06.2016**
(21) Application number: 09817623.3
(22) Date of filing: 08.09.2009
(51) Int. Cl.: B62K 11/04, B62M 7/02

(54) **ENGINE SUSPENSION STRUCTURE FOR TWO-WHEELED MOTOR VEHICLE**
MOTORAUFHÄNGUNGSSTRUKTUR FÜR EIN ZWEIRÄDRIGES KRAFTFAHRZEUG
STRUCTURE DE SUSPENSION MOTEUR POUR VÉHICULE À MOTEUR À DEUX ROUES

(30) Priority: 30.09.2008 JP 2008253835; 25.02.2009 JP 2009043002
(43) Date of publication of application: 13.07.2011
(73) Proprietor: Honda Motor Co., Ltd., Minato-ku Tokyo 107-8556 (JP)
(72) Inventor: YOKOMORI, Tetsuhito, Wako-shi Saitama 351-0193 (JP); SHIMADA, Takayuki, Wako-shi Saitama 351-0193 (JP); YAMAGUCHI, Masaaki, Wako-shi Saitama 351-0193 (JP); FUJIYAMA, Kotaro, Wako-shi Saitama 351-0193 (JP)
(74) Representative: Quinterno, Giuseppe
(86) International application number: PCT/JP2009/065635
(87) International publication number: WO 2010/038586

(56) References cited:
- JP-A- 2002 284 080
- JP-U- 56 049 685
- JP-U- 58 045 194
- JP-U- 60 104 388
- JP-U- 62 189 293
- JP-Y2- 59 003 018
- SU-A1- 1 261 833

## Description

The present invention relates in general to an improvement in an engine suspension structure for a two-wheeled motor vehicle, and in particular to an engine suspension structure as defined in the preamble of claim 1.

Engine suspension structures for two-wheeled motor vehicles having a down tube for supporting the front part of an engine are known, such as is disclosed in Japanese Patent Application Laid-Open Publication No. 6-247365 (JP 06-247365 A), for example. The down tube constitutes a vehicle body frame.

In JP 06-247365 A, one down tube extends downward from the front part of the vehicle body, and the front part of an engine is attached to the down tube via a mounting plate.

However, since the front part of the engine is attached to one down tube via a mounting plate, in cases in which the engine weight increases due to changing the model of the engine, for example, there are occasions in which greater support rigidity of the engine should be ensured.

Japanese Utility Model Application Laid-Open Publication No. 49685/1981 (JP-U-56-49685) shows an engine mount device having structural features which are substantially recited in the preamble part of claim 1.

It is an object of the present invention to provide an engine suspension structure for a two-wheeled motor vehicle whereby the support rigidity of the engine can be increased when is suspended.

According to an aspect of the present invention, this object is achieved by an engine suspension structure for a two-wheeled motor vehicle having the features defined in claim 1.

Preferably the left and right down frames and the mounting plate are fastened together by mounting plate fastening members, the mounting-plate fastening members being adapted to pass through the down frames, the mounting plate and the cross members and to fasten together the down frames and the mounting plate at outer sides of the down frames, and the mounting plate and the hangers are fastened together by engine-hanger fastening members with the hangers held by the mounting plate, the engine-hanger fastening members being designed to fasten the hangers from outer sides of the mounting plate.

It is preferable that the engine includes in a front surface an exhaust port to which an exhaust pipe is connected, the exhaust pipe being formed so as to curve rearward after extending forward from the exhaust port and to pass above the mounting plate and between the down frames, and the cross members have a concave part formed in a front part thereof so as to avoid interferences with the exhaust pipe extending from the engine.

Preferably, the cross members are formed to extend outward in the vehicle width direction from left and right side surfaces of the mounting plate positioned between the left and right down frames and to come into contact with the respective down frames.

It is preferable that the mounting frame has a front wall positioned toward the front of the vehicle body, and at least one opening is formed in the front wall.

Preferably, with a starter motor attached to a front part of the engine, the mounting plate covers a part of the starter motor.

In the engine suspension structure according to the present invention, since the mounting plate formed into a U-shaped cross-section has left and right side walls and the left and right side walls of the mounting plate are bridged by cross members, the rigidity of the mounting plate itself can be enhanced.

With the rigidity of the mounting plate thus increased, vibration of the down frames can be minimized, and traveling can be made more pleasant. In addition, the overall rigidity of the vehicle body frame can be increased.

In the present invention, since the down frames and the mounting plate are fastened in a direction in which the mounting plate is held between the down frames by a mounting-plate fastening member, the cross-sectional U-shaped mounting plate can be prevented from widening outward. The down frames, the mounting plate, and the cross members are passed through and fastened together by one mounting-plate fastening member. It is therefore possible to reduce the number of components and the labor needed for fastening.

Since the cross-members have a concave part formed in the front part thereof, there is a greater degree of freedom in arranging the exhaust pipe when the cross member is placed in proximity to the exhaust pipe.

Since the cross members are formed so as to extend outward in the vehicle width direction from the left and right side surfaces of the mounting plate between the two down frames and to be in contact with the down frames, there is no need to provide new collars or other separate members between the mounting plate and the down frames, and the number of components can be reduced.

Since an opening is formed in the front wall of the mounting plate, the mounting plate can be reduced in weight. In addition, the engine placed behind the mounting plate can be exposed to a traveling breeze through the opening. Therefore, although the mounting plate is placed in front of the engine, cooling of the engine is not compromised, and the engine can be efficiently cooled.

Embodiments of the invention will be now described with reference to the annexed drawings:
FIG. 1 is a side view of a two-wheeled motor vehicle having an engine suspension structure according to an example which is not according to the invention, but is useful for understanding the present invention;
FIG. 2 is an enlarged side view of the engine suspension structure of FIG. 1;
FIG. 3 is a front view of the engine suspension structure of FIG. 2;
FIG. 4 is a cross-sectional view taken along line 4-4 of FIG. 3;
FIG. 5 is a side view of a two-wheeled motor vehicle having an engine suspension structure according to an embodiment of the present invention;
FIG. 6 is an enlarged side view of the engine suspension structure of FIG. 5;
FIG. 7 is a view as indicated by arrow 7 of FIG. 6;
FIG. 8 is an enlarged cross-sectional view taken along line 8-8 of FIG. 6;
FIG. 9 is a front view of the mounting plate of FIG. 7;
FIG. 10 is a perspective view showing a state in which the mounting plate is attached to the left and right down frames shown in FIG. 7;
FIG. 11 is a first modification not corresponding to the invention of the attaching of the mounting plate according to the embodiment shown in FIG. 10; and
FIG. 12 is a second modification not corresponding to the invention of the attaching of the mounting plate according to the embodiment shown in FIG. 10.

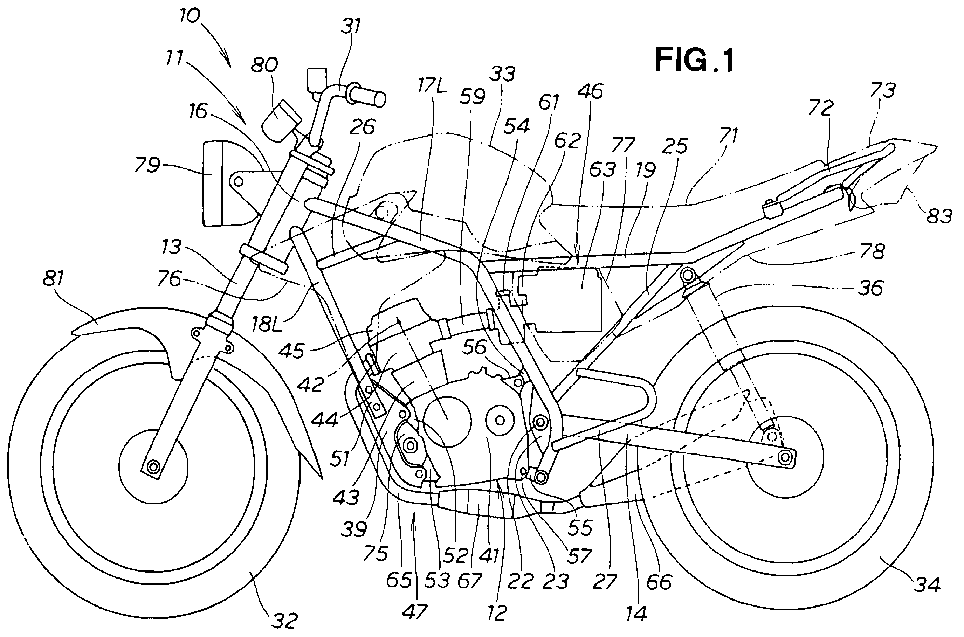

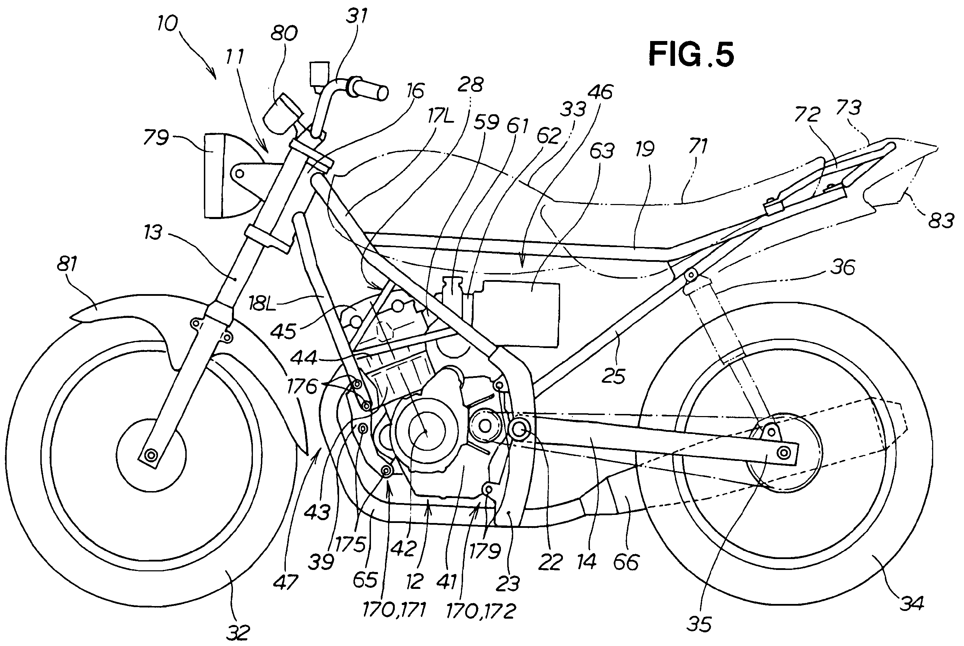

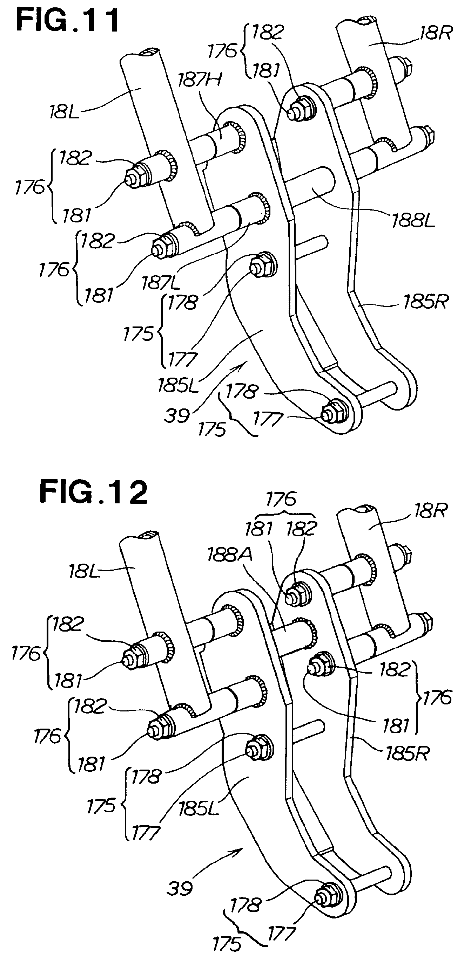

The preferred embodiment of the present invention is described in detail below with reference to the attached drawings. Figures 1-4 are not according to the invention but are useful for understanding the present invention shown in figures 5-10. Figures 11 and 12 are not according to the invention.

A two-wheeled motor vehicle 10 shown in FIG. 1 has an engine 12 disposed in the middle of a vehicle body frame 11, a front fork 13 steerably supported at the front end of the vehicle body frame 11, and left and right swing arms 14 supported to be capable of swinging vertically at the rear bottom part of the vehicle body frame 11.

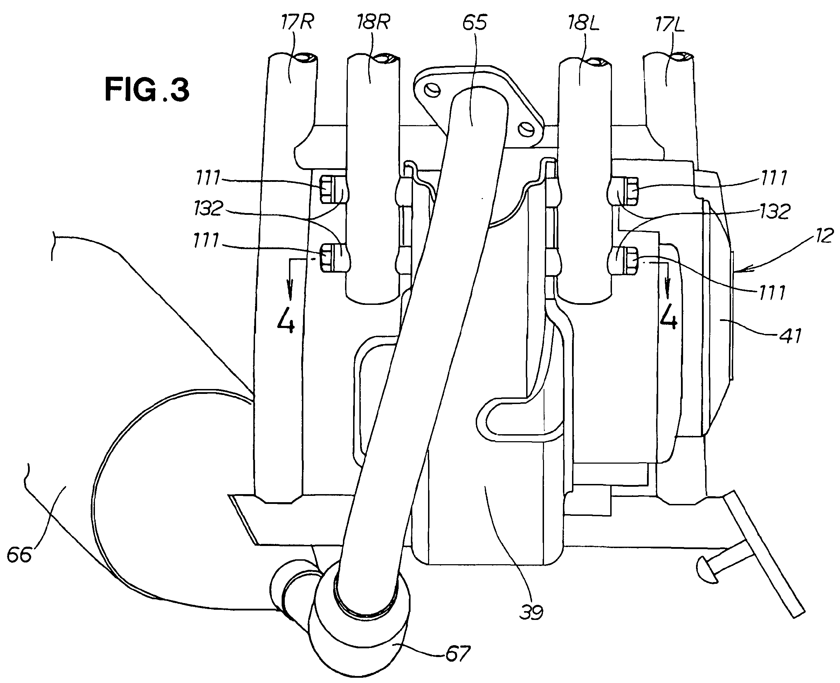

The vehicle body frame 11 has left and right main frames 17L, 17R (FIG. 3) extending rearward from a head pipe 16, left and right down frames 18L, 18R (FIG. 3) attached at the front ends to the head pipe 16 below the left and right main frames 17L, 17R and extending rearward and down from the head pipe 16; left and right seat rails 19 both extending rearward from the rear of the main frames 17L, 17R; and left and right sub frames 25 extending between the respective lower rear parts of the left and right main frames 17L, 17R and the respective middle parts of the left and right seat rails 19.

Left and right pivot plates 23 are provided at the bottom parts of the left and right main frames 17L, 17R, and these pivot plates have pivot shafts 22.

Left and right first auxiliary frames 26 are positioned at an upward incline from the engine 12, and are provided so as to extend between the left and right main frames 17L, 17R and the left and right down frames 18L, 18R. Left and right second auxiliary frames 27 are provided between the left and right main frames 17L, 17R and the left and right sub frames 25L, 25R.

The front fork 13 is turnably attached to the head pipe 16, a steering handle 31 is attached to the top part of the front fork, and a front wheel 32 is attached to the bottom part. A fuel tank 33 is provided so as to be positioned between the left and right main frames 17L, 17R.

The left and right swing arms 14 extend rearward from the left and right pivot plates 23, and a rear wheel 34, which is a drive wheel, is turnably supported on the rear ends of the swing arms. Left and right rear cushions 36 extend between the respective rear ends of the left and right swing arms 14 and the middle parts of the left and right seat rails 19.

The vehicle body frame 11 steerably supports the front wheel 32 and pivotally supports the rear wheel 34, and the engine 12 is suspended between the front wheel 32 and the rear wheel 34. The two left and right down frames 18L, 18R support the front part of the engine 12 via a mounting plate 39.

The engine 12 is suspended on the vehicle body frame 11. A gear-shifting mechanism 41 is integrally provided to the engine 12. A cylinder 43 has a forward-inclined axis line 42. Thus, since the axis line of the cylinder 43 is inclined forward, the center of gravity of the vehicle body can be kept low by placing the fuel tank 33 at a low height, for example. A cylinder head 44 is provided to the cylinder 43.

An air intake device 46 is connected to the rear part of the cylinder head 44. An exhaust device 47 is connected to the front part of the cylinder head 44. A cylinder head cover 45 is provided at the top end of the cylinder head 44. As described above, a forward-inclined example is shown for the axis line 42 of the cylinder 43 in the present example, but the axis line is not limited to this example and may be substantially vertical.

The engine suspension structure according to the example is described hereinbelow.

The vertically extending left and right down frames 18L, 18R are provided at the front part of the vehicle body frame 11. The mounting plate 39 is attached to the respective bottom ends 51 of the down frames. Two front hangers 52, 53 formed on the front part of the engine 12 are attached to the mounting plate 39. Two rear hangers 56, 57 formed at the rear part of the engine 12 are attached to top and bottom engine brackets 54, 55 provided to the main frames 17L, 17R. The hangers are configured from the front hangers 52, 53 and the rear hangers 56, 57. The down frames 18L, 18R are provided so as to hang in the width direction of the vehicle. In the first embodiment, the down frames 18L, 18R are tube members having circular cross sections, but the cross section shapes may also be elliptical or rectangular, and any arbitrary cross section shapes can be included as long as the shape ensures a predetermined rigidity. Furthermore, the down frames 18L, 18R are the same as tube members even if they are solid members.

The air intake device 46 has an air intake tube 59 connected at one end to the cylinder head 44, a fuel supply device 61 connected to the other end of the air intake tube 59, and an air cleaner 63 connected to the fuel supply device 61 via a connecting tube 62.

The exhaust device 47 has an exhaust pipe 65 connected at one end to the front end of the cylinder head 44 and extending down and rearward from the front of the engine 12, a muffler 66 connected to the other end of the exhaust pipe 65 and extending rearward, and a catalyst unit 67 placed in the middle of the exhaust pipe 65.

To describe the rear structure of the vehicle body, a rear grip 72 that the rider can grip by hand while the two-wheeled motor vehicle is traveling is attached to the left and right seat rails 19 supporting a rider seat 71. Part of the seat rails 19 and part of the rear grip 72 are covered by a rear cover member 73.

A starter motor 75 is attached to the front part of the engine 12. Left and right first side covers 76 cover the top of the engine 12. Left and right second side covers 77 cover the sides of the air cleaner 63. The reference numeral 78 denotes third side covers, 79 denotes a headlight, 80 denotes a gauge unit, 81 denotes a front fender, and 83 denotes a taillight unit.

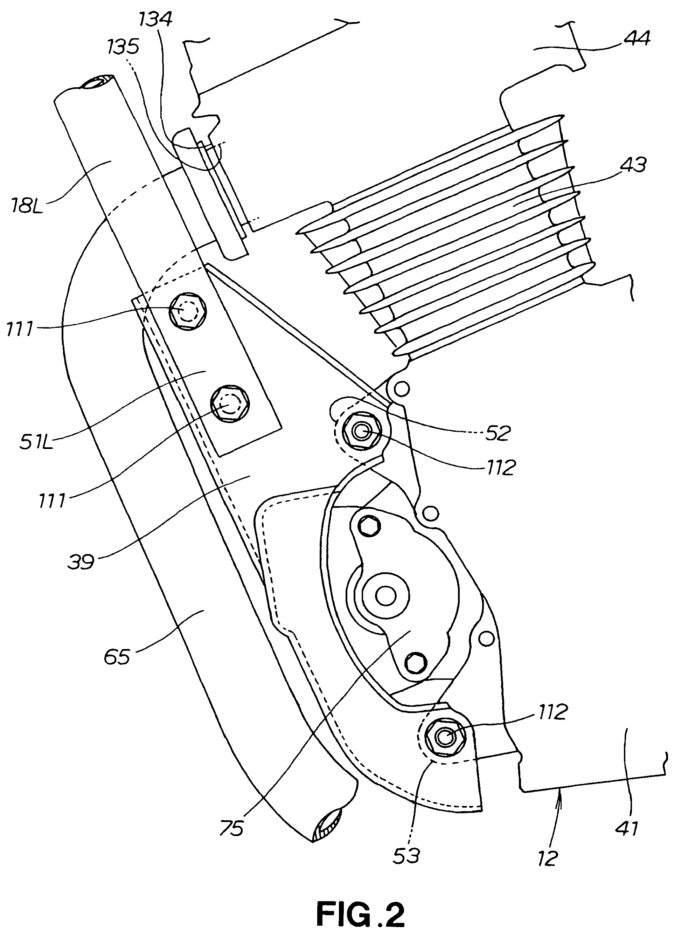

FIG. 2 shows a left side view of an engine suspension structure according to the example. A mounting plate 39 is attached via a plurality of top and bottom first fastening members 111, 111 on the inner side of a distal end 51 of the down frame 18L. The front hangers 52, 53 formed in the front part of the engine 12 are attached at the top and bottom to the inner side of the mounting plate 39 via a second fastening member 112. The starter motor 75 is attached to the engine 12 at the bottom part of the mounting plate 39. Part of the starter motor 75 is covered by the mounting plate 39.

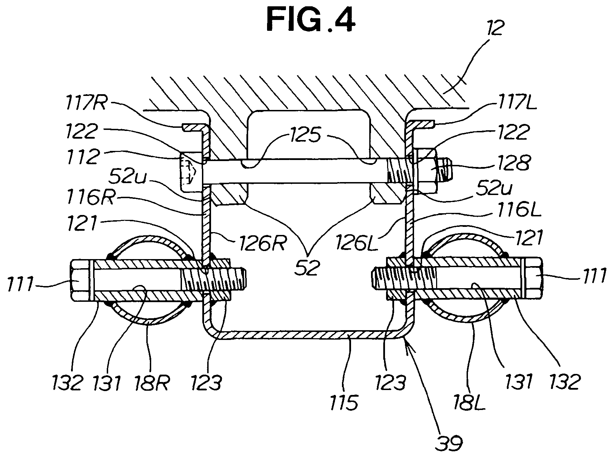

Referring to FIGS. 3 and 4, the left and right down frames 18L, 18R are aligned in the vehicle width direction and are provided so as to hang down. The mounting plate 39 is attached so as to be held between the two down frames 18L, 18R.

The mounting plate 39 has a U shape in cross section and is disposed so that a front wall 115 faces forward and an open side faces rearward. Left and right side walls 116L, 116R of the mounting plate 39 are attached to as to hold the top front hangers 52, 52 formed on the engine 12. The mounting plate 39 is attached to the bottom front hangers 53, 53 formed on the engine in the same manner as the top front hangers 52, 52.

Since the mounting plate 39 has a U-shape in cross-section, the mounting plate can be adapted to being attached to the engine 12 with no difficulty even if the top and bottom front hangers 52, 53 formed on the engine 12 have somewhat different widthwise lengths depending on the engine 12. In addition, the cost of the mounting plate 39 can be reduced, and the weight of the mounting plate can be reduced as well. In other words, in cases in which the engine model suspended on the vehicle body frame 11 is changed, it is sufficient to merely change the width of the open part of the mounting plate 39 so as to expand or reduce the width to adapt to the widthwise lengths of the top and bottom from hangers 52, 53, and it is therefore easy to flexibly adapt to a different engine model.

The mounting plate 39 is configured from the front wall 115, and the left and right side walls 116L, 116R extending rearward from the ends of the front wall 115. Left and right flanges 117L, 117R extend outward from the ends of the left and right side walls 116L, 116R. These left and right flanges 117L, 117R are brought in contact with the front surface of the engine, whereby the attached position of the mounting plate 39 is easily aligned in a predetermined position, and the ease of assembly is improved.

Referring to FIG. 2 as well, first through-holes 121, 121 through which the first fastening members 111, 111 are inserted are formed in the top parts if the left and right side walls 116L, 116R; and nuts 123, 123 for securing the first fastening members 111, 111 are affixed by welding to the inner sides of the left and right side walls 116L, 116R in which the first through-holes 121, 121 are formed. Second through-holes 122, 122 through which the second fastening member 112 is inserted
are formed in the bottoms of the left and right side walls 116L, 116R.

The following is a description of the attachment structure between the hangers and the mounting plate, the attachment structure between the down frames and the mounting plate, and the positional relationship between the exhaust pipe and the down frames. First, the attachment structure between the mounting plate 39 and the top hangers 52 formed on the engine 12 will be described.

Holes 125, 125 for suspension are formed in the top front hangers 52 constituting some of the front hangers and provided on the top side; the inside surfaces 126L, 126R of the left and right side walls 116L, 116R of the mounting plate 39 are brought in contact with the outside surfaces 52u of the top front hangers 52; the second fastening member 112 is inserted through the suspension holes 125, 125; and the mounting plate 39 is fixed to the top front hangers 52, 52 by a hanger nut 128 on the other side.

When the mounting plate 39 is attached to the top front hangers 52, 52 formed on the engine 12, the hanger nut 128 and the second fastening member 112 provided to the left and right side walls 116L, 116R are fastened together by hand from the side of the mounting plate 39. Since the left and right side walls 116L, 116R of the mounting plate 39 are easily handled, there is no concern that assembling productivity will be compromised when the engine 12 is suspended on the left and right down frames 18L, 18R via the mounting plate 39. The bottom front hangers 53 provided on the bottom side have the same configuration and function as the top front hangers 52, and the bottom front hangers 53 will not be described.

Next, the attachment structure between the left and right down frames 18L, 18R and the mounting plate will be described. Tubular collar members 132, 132 are passed horizontally through the down frames 18L, 18R and are affixed by welding.

The collar members 132, 132 have holes 131 through which the first fastening members 111, 111 are inserted.

The through-holes 121 of the mounting plate 39 are aligned with the holes 131 of the collar members 132, 132 attached to the down frames 18L, 18R, and the first fastening members 111, 111 are inserted through the holes 131 from the left and right outer sides and fastened, thereby attaching the mounting plate 39 to the down frames 18L, 18R.

Thus, when the mounting plate 39 is attached to the down frames 18L, 18R, it is easy for someone's hands to reach the first fastening members 111, 111 provided to the left and right side walls 116L, 116R from the sides of the mounting plate 39, the operation of fastening can be easily performed, and assembling productivity is improved.

Next, the positional relationship between the exhaust pipe and the down frames will be described.

The exhaust pipe 65 is connected to an exhaust port 135 provided to the front surface 134 of the cylinder head 44, as shown in FIG. 2. This exhaust pipe 65 is formed so as to curve rearward after extending forward, and is disposed so as to pass between the two left and right down frames 18L, 18R.

In a conventional example in which one down frame hangs down from the head pipe, the exhaust port formed in the cylinder head is disposed in the side in order to avoid interference between the exhaust pipe and the down frame, and the ideal port shape cannot be obtained.

In the present example, exhaust efficiency can be improved because although the exhaust port 135 (FIG. 2) is formed in the front surface of the cylinder head 44 of the engine 12, the exhaust pipe 65 is disposed so as to pass between the two down frames 18L, 18R without interfering with the left and right down frames 18L, 18R.

Particularly, when a vehicle in which the air intake device 46 is disposed behind the engine 12 is viewed from the front surface, the exhaust port 135 is positioned between the two down frames 18L, 18R, and the air intake device and exhaust port can be disposed along a straight line with the engine in the center in a top view of the vehicle. The engine output can therefore be improved.

The following is a description of the action of the engine suspension structure for the two-wheeled motor vehicle described above.

Two down frames 18L, 18R are disposed so as to hang down and be separated from each other in the width direction of the vehicle. The mounting plate 39 is attached to the two down frames 18L, 18R so as to be positioned between the down frames 18L, 18R.

Thus, since the two down frames 18L, 18R are provided in the vehicle width direction so as to hang down, the bending rigidity and torsional rigidity of the down frames 18L, 18R can be greatly improved in comparison with cases in which one down frame is provided. Increasing the rigidity of the down frames 18L, 18R can increase the support rigidity of the engine 12.

The mounting plate 39, located between the engine 12 and the down frames 18L, 18R, is disposed between the two down frames 18L, 18R.

Since the mounting plate 39 is supported from the outside by the two down frames 18L, 18R, the front part of the engine 12 can be supported better and the support rigidity of the engine 12 can be further improved in comparison with cases in which the mounting plate is supported by one down frame.

The mounting plate 39 of the present example extends from above the front surface of the engine 12 downward to a position where the bottom of the starter motor 75 is covered, and the left and right sides of the starter motor 75 are therefore better protected up to the front surface and the bottom than before. Thus, since the mounting plate 39 is used as a cover member of the starter motor 75, the rigidity of the starter motor 75 can be increased.

Next, the engine suspension structure of the embodiment shown in FIGS. 5 through 10 will be described. Said embodiment corresponds to the invention. Structural elements similar to those of the engine suspension structure according to the example shown in FIGS. 1 through 4 are denoted by the same reference numerals and will not be described in detail.

The essential configuration of the vehicle body frame 11 according to the embodiment is substantially identical to that of the vehicle body frame 11 according to the example. In FIG. 5, an V-shaped auxiliary frame 28 for increasing the vehicle body rigidity is provided above the engine 12, and is provided so as to extend between the main frames 17L, 17R and the down frames 18L, 18R.

Left and right rear cushions 36 are provided between the sub frames 25 and the rear ends 35 of the left and right swing arms 14.

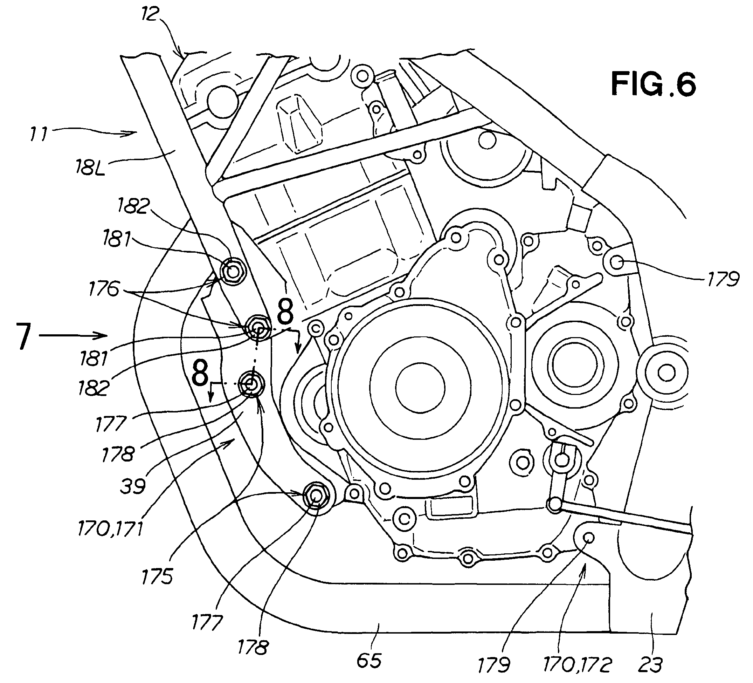

Next, the engine suspension structure according to the embodiment will be described based on FIGS. 6 through 9.

The engine 12 is attached to the vehicle body frame 11 by hangers 170 formed on the engine 12. The hangers 170 have a front hanger 171 provided to the front part of the engine 12, and a rear hanger 172 provided to the rear part of the engine 12.

The mounting plate 39 is attached to the front hanger 171 via engine-hanger fastening members 175. The mounting plate 39 is attached to the down frames 18L, 18R via mounting-plate fastening members 176. In other words, the mounting plate 39 links the down frames 18L, 18R with the front hanger 171 formed on the engine 12, mounting the engine 12 on the vehicle body frame 11.

The engine-hanger fastening members 175 have hanger bolts 177, 177 and hanger nuts 178, 178. Similarly, the mounting-plate fastening members 176, 176 have mounting bolts 181, 181 and mount nuts 182, 182. The rear hanger 172 provided at to the rear part of the engine 12 is suspended on the pivot plates 23 via rear hanger fastening members 179, 179.

The mounting plate 39 has left and right side walls 185L, 185R which engage with the front hanger 171, a front wall 186 integrally extending between the left and right side walls 185L, 185R, and pipe members 187 attached so as to pass through the left and right side walls 185L, 185R and disposed parallel to the front wall 186; and the mounting plate 39 has a U shape in cross section which opens toward the front hanger 171 (to the rear of the vehicle).

The parts of the pipe members 187, which are structural members of the mounting plate 39, that span the space between the left and right side walls 185L, 185R can be referred to as cross members 188. The rigidity of the mounting plate 39 itself can be enhanced because the cross members 188 span the space between the left and right side walls 185L, 185R. Thus, the attachment rigidity of the engine 12 is increased because the rigidity of the mounting plate 39 itself is enhanced by the cross members 188. The spanning of the cross members 188 also makes it possible to make the configuration of the mounting plate 39 smaller and to reduce the plate thickness, reducing the overall weight of the mounting plate.

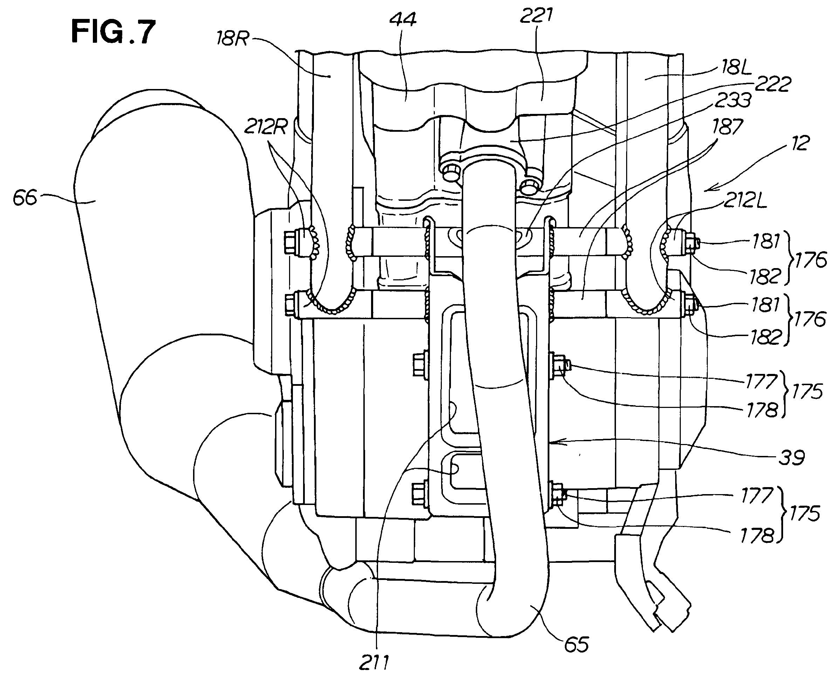

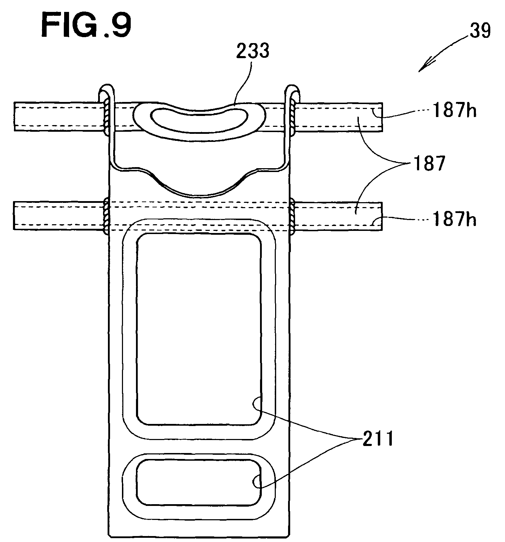

Openings 211 are also formed in the front wall 186 of the mounting plate 39, as shown in FIGS. 7 and 9. Since the mounting plate 39 has openings 211, the weight of the mounting plate 39 is reduced. Furthermore, the engine 12 disposed behind the mounting plate 39 can be exposed to a traveling breeze through the openings 211. Thus, although the mounting plate 39 is disposed in front of the engine 12, cooling of the engine 12 is not compromised and the engine 12 can be effectively cooled.

In the down frames 18L, 18R, left and right collar members 212L, 212R are attached to the left and right outer sides of the pipe members 187 provided to the mounting plate 39. The mounting bolts 181, which are structural members of the mounting-plate fastening members 176, are inserted through the right collar members 212R, the pipe members 187, and the left collar members 212L in the stated order, and are secured from the side with the left collar members 212L by the mount nuts 182, which are structural members of the mounting-plate fastening members 176, thereby attaching the mounting plate 39 to the down frames 18L, 18R.

In the mounting plate 39, the front hanger 171 at the front of the engine 12 is attached to the inner sides of the left and right side walls 185L, 185R via the two top and bottom engine-hanger fastening members 175.

Specifically, the down frames 18L, 18R and the mounting plate 39 are fastened together, and the mounting-plate fastening members 176, which pass through the down frames 18L, 18R, the mounting plate 39, and the cross members 188, and which are fastened at the outer side ends of the two down frames 18L, 18R, are provided between the down frames 18L, 18R and the mounting plate 39. Furthermore, the engine-hanger fastening members 175 fastened from the outside ends of the mounting plate 39 are provided between the mounting plate 39 and the hangers 170 while the hangers 170 are held by the mounting plate 39.

Two down frames 18L, 18R are provided so as to hang down and be separated from each other in the width direction of the vehicle; the mounting plate 39 is attached to the cross members 188 so as to be positioned between the down frames 18L, 18R; and the left and right side surfaces 214L, 214R of the mounting plate are bridged by the cross members 188.

Since the mounting-plate fastening members 176 are designed to fasten the mounting plate 39 in a direction of securing the mounting plate 39 between the down frames 18L, 18R, there is no concern over any outward expanding of the left and right side walls 185L, 185R of the mounting plate 39, which has a cross-sectional U shape that opens toward the hangers 170.

The mounting-plate fastening members 176, which pass through the down frames 18L, 18R, the mounting plate 39, and the cross members 188, and which are fastened between the outside ends of the two down frames 18L, 18R, are provided between the down frames 18L, 18R and the mounting plate 39.

Fastening the left down frame and mounting plate, the right down frame and mounting plate, and the mounting plate and cross members together by separate fastening members would increase the number of components and the time required for fastening.

In view of this, a single mounting-plate fastening member 176 is passed through in the second embodiment, and the mounting plate 39 is attached to the down frames 18L, 18R. It is therefore possible to reduce the number of components and the labor required for fastening.

The mounting plate 39 having a U shape in cross section supports the front hanger 171 from the left and right outer sides, and the mounting plate is attached to the front hanger 171. The front hanger 171 is provided at two top and bottom locations, and the top and bottom front hangers 171, 171 have the same structure.

The attachment structure between the mounting plate 39 and the front hanger 171 formed on the engine 12 is further described hereinbelow.

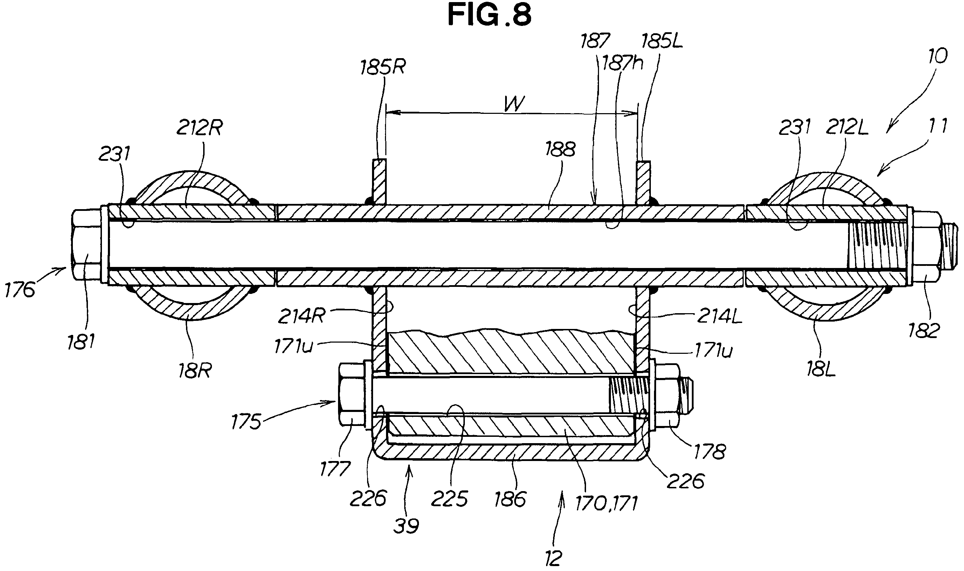

Holes 225 for suspending the engine are formed in the front hanger 171, as shown in FIG. 8. The inside surfaces 214L, 214R of the side walls 185L, 185R of the mounting plate 39 are brought in contact with the outside surfaces 171u, 171u of the front hanger 171; the hanger bolts 177 of the engine-hanger fastening members 175 are inserted into holes 226, 226 formed in the side walls 185L, 185R; and the mounting plate 39 is fixed to the front hanger 171 by the hanger nuts 178.

Therefore, when the mounting plate 39 is attached to the hangers 170 formed on the engine 12, someone's hands can easily reach the hanger bolts 177 and the hanger nuts 178 from the sides of the mounting plate 39, and the operation of fastening can be performed easily. Therefore, when the engine is suspended on the vehicle body frame, the ease of assembly is not compromised. The bottom front hanger 171 has the same structure as the top front hanger 171 and will not be described.

Next, the attaching of the down frames 18L, 18R and the mounting plate 39 will be described. The tubular collar members 212L, 212R are attached by welding to the down frames 18L, 18R so as to be horizontal, as shown in FIG. 8. The collar members 212L, 212R have holes 231, 231 through which the mounting-plate fastening members 176 are inserted.

Holes 187h of the cross members 188 are matched up with the holes 231, 231 of the collar members 212L, 212R attached to the down frames 18L, 18R; the mounting bolts 181 are inserted through a hole 231, the holes 187h, and the other hole 231 from the right outer side; and the mounting bolts 181 are fastened from the left outer side by the mount nuts 182, whereby the mounting plate 39 can easily be attached to the down frames 18L, 18R.

Next, referring to FIG. 7, the positional relationship between the exhaust pipe 65 and the down frames 18L, 18R will be described.

The exhaust pipe 65 is connected to an exhaust port 222 provided in the front surface 221 of the cylinder head 44. The exhaust pipe 65 is formed so as to curve to the rear of the vehicle body after extending to the front of the engine 12, as shown in FIG. 6. The exhaust pipe 65 is disposed so as to pass between the two down frames 18L, 18R, as shown in FIG. 7.

In the prior art, in which one down frame hangs down from the head pipe, the exhaust port formed in the cylinder head is disposed to the side in order to avoid interference between the exhaust pipe and the down frame, and the ideal port shape cannot be obtained.

By contrast, the ideal port shape for improving exhaust efficiency can be obtained in the embodiment because the exhaust pipe 65 passes between the two down frames 18L, 18R without interfering with the down frames 18L, 18R even though the exhaust port 222 is formed in the front surface of the cylinder head 44 of the engine 12.

Particularly, when the air intake device 46 (FIG. 5) is disposed behind the engine 12, the exhaust port 222 is positioned between the two down frames 18L, 18R, whereby the air intake device 46 and the exhaust port 222 can be disposed along a straight line with the engine 12 in the center, and the engine output can therefore be improved.

Since the cross members 188 are integrally formed extending in the vehicle width direction from the mounting plate 39 so as to be in contact with the two down frames 18L, 18R as shown in FIG. 8, the number of components can be reduced.

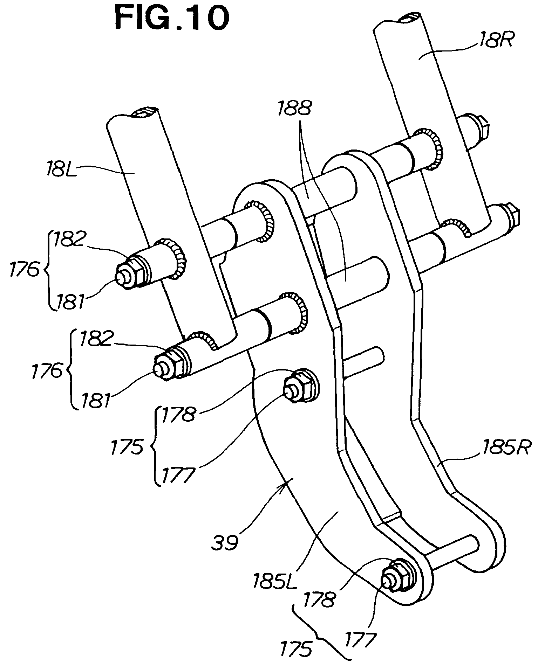

Next, the action of the engine suspension structure described above will be described based on FIG. 10.

In FIG. 10, the two down frames 18L, 18R are linked together via the mounting plate 39. The engine 12 (FIG. 2) is suspended on the mounting plate 39. Therefore, since the two down frames 18L, 18R are linked together by the mounting plate 44, the bending rigidity and torsional rigidity of the down frames 18L, 18R can be enhanced.

The rigidity of the mounting plate 39 itself can be enhanced because the left and right side walls 185L, 185R of the mounting plate 39 are bridged by the two top and bottom cross members 188. If the rigidity of the mounting plate 39 is enhanced, vibration of the down frames 18L, 18R can be minimized and traveling can be made more pleasant. The overall rigidity of the vehicle body frame can also be enhanced.

The fastening directions coincide for the engine-hanger fastening members 175, 175 for fastening the engine 12 to the mounting plate 39 and the mounting-plate fastening members 176, 176 for fastening the mounting plate 39 to the down frames 18L, 18R. If the fastening directions coincide, twisting and the like does not readily occur in the mounting plate 39, and the mounting plate 39 can therefore be made thinner and more lightweight.

In the top front part of the top cross member 188 in the longitudinal center, a concave part 133 is formed for avoiding interference with the exhaust pipe 65 extending from the engine 12, as shown in FIGS. 7 and 9. Therefore, the cross member 188 does not affect the placement of the exhaust pipe 65 even if placed in proximity to the exhaust pipe 65.

FIG. 11 shows a first modification of the cross members according to the embodiment shown in FIG. 10. FIG. 11 does not correspond to the present invention.

A large difference between the structure of the first modification shown in FIG. 11 and that of the embodiment is that the top pipe member 187H, which is one
of the top and bottom pipe members 187H, 187L, does not span the space between the left and right side walls 185L, 185R of the mounting plate 39. In other words, only one cross member 188L spans the space between the left and right side walls 185L, 185R. The structure otherwise has no significant differences from the embodiment shown in FIG. 10.

Thus, the first modification has a configuration in which only one cross member 188L spans the space between the left and right side walls 185L, 185R. It is therefore possible to minimize the increase in the weight of the mounting plate 39 and the decrease in the rigidity of the mounting plate 39.

FIG. 12 shows a second modification of the cross members according to the embodiment shown in FIG. 10. FIG. 12 does not correspond to the present invention.

One large difference between the structure of the second modification shown in FIG. 12 and that of the embodiment is that the top and pipe members do not span the space between the left and right side walls 185L, 185R of the mounting plate 39. In other words, separately from the top and bottom pipe members, a cross member 188A is placed across at a different position than the position spanned by top and bottom pipe members. The structure otherwise has no significant differences from the embodiment shown in FIG. 10.

The present invention is ideal for a two-wheeled motor vehicle having a structure in which an engine is attached to down frames via a mounting plate.

## Claims

1. An engine suspension structure for a two-wheeled motor vehicle (10), comprising:
a vehicle body frame (11);
an engine (12) suspendedly supported on the vehicle body frame (11);
left and right down frames (18L, 18R) forming part of the vehicle body frame (11) and extending vertically in front of the engine (12), the left and right down frames (18L, 18R) being separated in a vehicle width direction; and
a mounting plate (39) for linking together the down frames (18L, 18R) and hangers (170) provided on the engine (12) for thereby mounting the engine (12),
wherein the mounting plate (39) is attached in such a manner as to be sandwiched between the left and right down frames (18L, 18R), and
the mounting plate (39) is formed into a U-shaped cross-section opened toward the hangers (170), has left and right side walls (185L, 185R), and is attached to the hangers (170) so as to sandwich the hangers (170),
**characterized in that**
the left and right side walls (185L, 185R) of the mounting plate (39) are bridged by cross members (188; 188A).

2. The engine suspension structure of claim 1, wherein the left and right down frames (18L, 18R) and the mounting plate (39) are fastened together by mounting-plate fastening members (176), the mounting-plate fastening members (176) being adapted to pass through the down frames (18L, 18R), the mounting plate (39) and the cross members (188; 188A) and to fasten together the down frames (18L, 18R) and the mounting plate (39) at outer sides of the down frames (18L, 18R), and wherein the mounting plate (39) and the hangers (170) are fastened together by engine-hanger fastening members (175) with the hangers (170) held by the mounting plate (39), the engine-hanger fastening members (175) being designed to fasten the hangers (170) from outer sides of the mounting plate (39).

3. The engine suspension structure of claim 1, wherein the engine (12) includes in a front surface (221) an exhaust port (222) to which an exhaust pipe (65) is connected, the exhaust pipe (65) being formed so as to curve rearward after extending forward from the exhaust port (222) and to pass above the mounting plate (39) and between the down frames (18L, 18R), and wherein the cross members (188) have a concave part (233) formed in a front part thereof so as to avoid interference with the exhaust pipe (65) extending from the engine (12).

4. The engine suspension structure of claim 1, wherein the cross members (188) are formed to extend outward in the vehicle width direction from left and right side surfaces of the mounting plate (39) positioned between the left and right down frames (18L, 18R) and to come into contact with the respective down frames (18L, 18R).

5. The engine suspension structure of claim 1, wherein the mounting plate (39) has a front wall (186) positioned toward the front of the vehicle body, and at least one opening (211) is formed in the front wall (186).

6. The engine suspension structure of claim 1, further including a starter motor (75) attached to a front part of the engine (12), wherein the mounting plate (39) covers a front part of the starter motor (75).

## Patentansprüche

1. Eine Motoraufhängungsstruktur für ein zweirädriges Kraftfahrzeug (10), die folgende Merkmale aufweist:
einen Fahrzeugkörperrahmen (11);
einen Motor (12), der aufgehängt an dem Fahrzeugkörperrahmen (11) getragen wird;
einen linken und rechten unteren Rahmen (18L, 18R), die einen Teil des Fahrzeugkörperrahmens (11) bilden und sich vertikal vor dem Motor (12) erstrecken, wobei der linke und der rechte untere Rahmen (18L, 18R) in einer Fahrzeugbreitenrichtung getrennt sind; und
eine Befestigungsplatte (39) zum Verbinden der unteren Rahmen (18L, 18R) und von Hängern (170), die an dem Motor (12) vorgesehen sind, miteinander, um dadurch den Motor (12) zu befestigen,
wobei die Befestigungsplatte (39) auf eine derartige Weise angebracht ist, dass sie sandwichartig zwischen dem linken und dem rechten unteren Rahmen (18L, 18R) angeordnet ist, und
die Befestigungsplatte (39) in einen U-förmigen Querschnitt geformt ist, der in Richtung der Hänger (170) geöffnet ist, eine linke und eine rechte Seitenwand (185L, 185R) aufweist und so an den Hängern (170) angebracht ist, dass die die Hänger (170) sandwichartig umgibt,
**dadurch gekennzeichnet, dass**:
die linke und die rechte Seitenwand (185L, 185R) der Befestigungsplatte (39) durch Querbauteile (188; 188A) überbrückt sind.

2. Die Motoraufhängungsstruktur gemäß Anspruch 1, bei der der linke und der rechte untere Rahmen (18L, 18R) und die Befestigungsplatte (39) durch Befestigungsplatten-Haltebauteile (176) zusammengehalten werden, wobei die Befestigungsplatten-Haltebauteile (176) angepasst sind, durch die unteren Rahmen (18L, 18R), die Befestigungsplatte (39) und die Querbauteile (188; 188A) zu verlaufen und die unteren Rahmen (18L, 18R) und die Befestigungsplatte (39) an äußeren Seiten der unteren Rahmen (18L, 18R) zusammenzuhalten, und wobei die Befestigungsplatte (39) und die Hänger (170) durch Motor-Hänger-Haltebauteile (175) zusammengehalten werden, wobei die Hänger (170) durch die Befestigungsplatte (39) gehalten werden, wobei die Motor-Hänger-Haltebauteile (175) entworfen sind, die Hänger (170) von äußeren Seiten der Befestigungsplatte (39) zu halten.

3. Die Motoraufhängungsstruktur gemäß Anspruch 1, bei der der Motor (12) in einer Vorderoberfläche (221) einen Auspuffanschluss (222) beinhaltet, mit dem ein Auspuffrohr (65) verbunden ist, wobei das Auspuffrohr (65) so gebildet ist, dass es nach hinten gekrümmt ist, nachdem es sich von dem Auspuffanschluss (222) nach vorne erstreckt, und oberhalb der Befestigungsplatte (39) und zwischen den unteren Rahmen (18L, 18R) verläuft, und wobei die Querbauteile (188) einen konkaven Teil (233) aufweisen, der in einem vorderen Teil derselben gebildet ist, um so eine Überlagerung mit dem Auspuffrohr (65), das sich von dem Motor (12) erstreckt, zu vermeiden.

4. Die Motoraufhängungsstruktur gemäß Anspruch 1, bei der die Querbauteile (188) so gebildet sind, dass sie sich in der Fahrzeugbreitenrichtung von der linken und der rechten Seitenoberfläche der Befestigungsplatte (39), die zwischen dem linken und dem rechten unteren Rahmen (18L, 18R) positioniert ist, nach außen erstrecken und in Kontakt mit den jeweiligen unteren Rahmen (18L, 18R) kommen.

5. Die Motoraufhängungsstruktur gemäß Anspruch 1, bei der die Befestigungsplatte (39) eine Vorderwand (186) aufweist, die in Richtung der Vorderseite des Fahrzeugkörpers positioniert ist, und zumindest eine Öffnung (211) in der Vorderwand (186) gebildet ist.

6. Die Motoraufhängungsstruktur gemäß Anspruch 1, die ferner einen Anlasser (75) aufweist, der an einem vorderen Teil des Motors (12) angebracht ist, wobei die Befestigungsplatte (39) einen vorderen Teil des Anlassers (75) bedeckt.

## Revendications

1. Structure de suspension moteur pour véhicule motorisé à deux roues (10), comprenant :
un cadre de carénage (11) de véhicule ;
un moteur (12) supporté de manière suspendue sur le cadre de carénage (11) du véhicule ;
des cadres inférieurs (18L, 18R) gauche et droit faisant partie du cadre de carénage (11) du véhicule et s'étendant verticalement devant le moteur (12), les cadres inférieurs (18L, 18R) gauche et droit étant séparés dans le sens de la largeur du véhicule ; et
une plaque d'assemblage (39) pour relier les deux cadres inférieurs (18L, 18R) l'un à l'autre et des supports (170) prévus sur le moteur (12) pour assembler ainsi le moteur (12),
la plaque d'assemblage (39) étant fixée de manière à être prise en sandwich entre les cadres inférieurs (18L, 18R) gauche et droit, et
la plaque d'assemblage (39) étant formée de manière à avoir une coupe transversale en forme de U ouverte vers les supports (170), présentant des parois latérales (185L, 185R) gauche et droite et étant fixée aux supports (170) afin de prendre en sandwich les supports (170), **caractérisée en ce que** les parois latérales (185L, 185R) gauche et droite de la plaque d'assemblage (39) sont reliées par des éléments transversaux (188 ; 188A).

2. Structure de suspension moteur selon la revendication 1, dans laquelle les cadres inférieurs (18L, 18R) gauche et droit ainsi que la plaque d'assemblage (39) sont fixés ensemble à l'aide d'éléments de fixation (176) de plaque d'assemblage, les éléments de fixation (176) de plaque d'assemblage étant adaptés pour traverser les cadres inférieurs (18L, 18R), la plaque d'assemblage (39) et les éléments transversaux (188, 188A) et pour fixer ensemble les cadres inférieurs (18L, 18R) et la plaque d'assemblage (39) sur les côtés extérieurs des cadres inférieurs (18L, 18R) et dans laquelle la plaque d'assemblage (39) et les supports (170) sont fixés ensemble à l'aide de fixations (175) de support moteur avec les supports (170) maintenus par la plaque d'assemblage (39), les fixations (175) de support moteur étant conçues pour fixer les supports (170) depuis les côtés extérieurs de la plaque d'assemblage (39).

3. Structure de suspension moteur selon la revendication 1, dans laquelle le moteur (12) comprend, dans la surface avant (221), un orifice d'échappement (222) auquel est raccordé un tuyau d'échappement (65), le tuyau d'échappement (65) étant formé de manière à être coudé vers l'arrière après extension vers l'avant depuis l'orifice d'échappement (222) et de manière à passer au-dessus de la plaque d'assemblage (39) et entre les cadres inférieurs (18L, 18R) et dans laquelle les éléments transversaux (188) ont une partie concave (233) formée dans leur partie avant dans le but d'éviter toute gêne avec le tuyau d'échappement (65) s'étendant depuis le moteur (12).

4. Structure de suspension moteur selon la revendication 1, dans laquelle les éléments transversaux (188) sont formés de manière à s'étendre vers l'extérieur dans le sens de la largeur du véhicule depuis les surfaces latérales gauche et droite de la plaque d'assemblage (39) placée entre les cadres inférieurs (18L, 18R) gauche et droit et à venir en contact avec les cadres inférieurs (18L, 18R) respectifs.

5. Structure de suspension moteur selon la revendication 1, dans laquelle la plaque d'assemblage (39) a une paroi avant (186) placée vers l'avant du carénage du véhicule et au moins une ouverture (211) est formée dans la paroi avant (186).

6. Structure de suspension moteur selon la revendication 1, comprenant en outre un starter (75) fixé sur la partie avant du moteur (12), dans laquelle la plaque d'assemblage (39) couvre la partie avant du starter (75).
